# EUROPÄISCHE PATENTANMELDUNG

(11) **EP 1 335 231 A1**
(43) Veröffentlichungstag der Anmeldung: **13.08.2003**
(21) Anmeldenummer: 03002719.7
(22) Anmeldetag: 06.02.2003
(51) Int. Cl.: G02B 23/08

(54) **Periskop mit Vorrichtung zur Einblendung von Zusatzinformationen**

(30) Priorität: 06.02.2002 DE 10204976
(71) Anmelder: Diehl Munitionssysteme GmbH & Co. KG, 90552 Röthenbach (DE)
(72) Erfinder: Schmidt, Dirk, Dr., 85302 Gerolsbach (DE); Tengler, Jürgen, 90571 Schwaig (DE); Warm, Berndt, Dr., 90571 Schwaig (DE)
(74) Vertreter: Diehl Patentabteilung

(57) **Zusammenfassung**

Durch Einblenden in das Winkelspiegel-System eines Periskopes (11) werden dem Außenbild (21) Zusatzinformationen (22) überlagert, bei denen es sich im Falle des Einsatzes von Kameras um Tageslicht- oder Infrarot-Geländebilder und im Falle des Einsatzes eines Simulationssystems etwa um synthetische Landschaftsdarstellungen handeln kann, die am Periskop (11) wie auf einem Monitor betrachtet werden können.

## Beschreibung

Die Erfindung betrifft ein Periskop gemäß dem Oberbegriff des Anspruches 1.

Ein derartiges optisches Gerät ist zum Ausblick in die Umgebung insbesondere aus geschützten Räumen wie aus einem getauchten U-Boot oder aus einem gepanzerten Fahrzeug heraus bei zahlreichen Waffensystemen in verschiedenen konstruktiven Varianten eingeführt. Das Periskop wird auch als Winkelspiegel bezeichnet, weil es im wesentlichen aus einem die Ausblickdistanz vom Operationsraum zur Umgebung überbrückenden Tubus mit gegenüber dessen Achse geneigten externen und internen Reflexionsflächen besteht; wobei dieses Konstruktionsprinzip insbesondere bei kurzem Spiegelabstand, wenn damit etwa nur eine Panzerung durchdrungen werden muß, auch durch einen Glaszylinder mit abgeschrägten und verspiegelten Stirnflächen realisiert sein kann.

Generell von Nachteil ist bei einem solchen Ausblickgerät, daß der Beobachter mit den Augen möglichst nahe an die untere Öffnung des Winkelspiegels herangehen muß. So verliert er beim Betrachten eines Außenbildes den Kontakt zu Informationsquellen im Innenraum, d.h. er kann nicht gleichzeitig Informationen z. B. von einem Instrumentenbrett berücksichtigen.

Eine derartige Einschränkung hat oft gravierende Nachteile, z. B. wenn ein Fahrer eines gepanzerten Fahrzeuges die aktuellen Werte über die Fahrzeuggeschwindigkeit und über die Drehzahl des Antriebsmotors erfahren möchte, um das Fahrzeug optimal im Gelände bewegen zu können. Entsprechende Einschränkungen treten auf, wenn etwa der Kommandant eines gepanzerten Fahrzeuges das aktuell durch das Periskop aufgenommene Außenbild mit einer Karte vergleichen bzw. mit Koordinaten wie der Nordrichtung von Instrumenten abgleichen möchte, um das Fahrzeug optimal im Gelände navigieren zu können.

Für Nachtfahrten unter operationellen Bedingungen kann der Winkelspiegel des Fahrers herkömmlicherweise gegen einen Winkelspiegel mit integriertem Restlichtverstärker ausgetauscht werden. Dementsprechend ausgestattete Winkelspiegel sind zusätzlich mitzuführen und bedarfsweise anstelle des einfachen Periskops zu montieren. Während diesen Umbaus besteht keine Ausblickmöglichkeit, was gerade unter operationellen Bedingungen kritisch sein kann.

Für eine Objektbeobachtung über einen derartigen Winkelspiegel ist es aus der gattungsbildenden DE 32 32 092 C1 bekannt, dadurch einen gleitenden Übergang zwischen Tag- und Nachtsituation zu ermöglichen, dass der Darstellung des realen Objektes dessen Wärmebild überlagert wird. Damit bleibt aber die Beobachtung auf die Außenszene beschränkt.

Deshalb liegt der Erfindung die technische Problemstellung zugrunde, ohne Beeinträchtigung der herkömmlichen Ausblickmöglichkeiten über ein Periskop dem Beobachter ersatzweise oder zusätzliche Informationen, vor allem aus dem Innern des Operationsraumes, zur Verfügung zu stellen.

Diese Aufgabe ist erfindungsgemäß durch die im Hauptanspruch angegebene Kombination der wesentlichen Merkmale gelöst. Danach wird beim einblickseitigen, also im Innern des Operationsraumes geschützt gelegenen Umlenkreflektor des Teleskopes ein Strahlteiler vorgesehen, mittels dessen das von der außerhalb gelegenen Umlenkfläche erfaßte Außenbild überlagert wird von der Zusatzinformation eines gewissermaßen synthetischen Bildes. Darunter ist im Rahmen vorliegender Erfindung jede Art einer mittels eines elektrooptischen Display erzeugbaren Darstellung zu verstehen. Das Display dient also etwa der Darbietung graphischer, analoger oder digitaler, visuell darzustellender Zusatz-Informationen, die dem Außenbild bei der inneren, betrachterseitigen Umlenkfläche überlagert werden. Diese Informationen können von Meßgeräten stammen, aber auch von einem Symbolgenerator etwa zur Lagedarstellung. Das jeweilige synthetische Bild wird dabei über eine Lupe eingeblendet, um es dem Auge des Betrachters entsprechend dem Außenbild "im Unendlichen" darzustellen, also Adaptionserfordernisse des Auges auf unterschiedliche Entfernungen zu vermeiden. Für eine gleichzeitige oder abwechselnde Darstellung von Außenbild und synthetischem Bild wird zweckmäßigerweise deren unterschiedliche Helligkeit durch entsprechende Wahl des Aufteilungsverhältnisses im Strahlteiler berücksichtigt, um auch das Erfordernis von Helligkeitsadaptionen im Interesse rascher Auffassung der jeweiligen Darstellung auf ein Minimum zu reduzieren.

Durch die erfindungsgemäße Ausstattung ergibt sich so ein gewissermaßen multifunktionaler Winkelspiegel, der in vier verschiedenen Operations-Modi betrieben werden kann:
1. Bei abgeschaltetem Display und offenem Winkelspiegel wirkt der als normales Periskop.
2. Bei eingeschaltetem Display und offenem Winkelspiegel können dem Außenbild der Umgebung sensorisch erfaßte oder synthetisch generierte Informationen vom Display überlagert werden (z. B. Motordrehzahl, Fahrzeuggeschwindigkeit, Nordrichtung, Kartenausschnitt usw.).
3. Bei eingeschaltetem Display und abgedecktem Ausblick aus dem Winkelspiegel kann z. B. auf dem Display das Bild einer Infrarot-Kamera dargestellt und für die Nachtfahrt in das Periskop eingeblendet werden.
4. Bei eingeschaltetem Display und abgedecktem Ausblick aus dem Winkelspiegel kann z. B. auf dem Display das generierte Bild einer virtuellen Landschaft dargestellt werden, und so - insbesondere in Verbindung mit einem angeschlossenen Simulationsrechner - ein mit solchem Periskop ausgestattetes Fahrzeug als Ausbildungs-Simulator genutzt werden.

Verfügen im drittgenannten Modus sowohl Fahrer als auch Kommandant eines Fahrzeugs über die hier beschriebene Periskopausstattung, dann läßt sich etwa das Bild einer Infrarot-Kamera sowohl dem Fahrer als auch dem Kommandanten gleichzeitig über seinen jeweiligen Einblickspiegel der innengelegenen Umlenkfläche einblenden. Hierdurch können Sensoren und damit Kosten gespart werden.

Die erfindungsgemäße Ausstattung des Periskopes läßt sich ohne weiteres nachträglich applizieren, indem der Strahlteiler zur Überlagerung der beiden Strahlengänge des Außenbildes und der Zusatzinformationen nicht im Innern des Periskopes angeordnet sondern extern vor der Einblick-Öffnung adaptiert wird. Im übrigen läßt sich die erfindungsgemäße Ausstattung noch dahingehend erweitern, daß die über zwei Kameras bei Tageslicht oder im Infrarot-Spektrum aufgenommene Umgebung auf zwei Displays wiedergegeben wird, die zu parallelen Strahlengängen für diese koordinierten Zusatzinformationen und damit zu einem betrachterseitigen Stereobild führen.

Zusätzliche Alternativen, Weiterbildungen und Vorteile der erfindungsgemäßen Lösung ergeben sich aus den weiteren Ansprüchen und aus nachstehender Beschreibung von bevorzugten Realisierungsbeispielen zur Erfindung. In der Zeichnung zeigt :
- Fig.1: den prinzipiellen adaptiven Aufbau zum externen Einblenden einer Zusatzinformation in einen Außenbild-Strahlengang am raumseitigen Einblick in ein Periskop und
- Fig.2: einen gegenüber der Lösung nach Fig. 1 abgewandelten Aufbau mit internem Einblenden der Zusatzinformation in das Periskop.

Das in der Zeichnung im Axial-Längsschnitt skizzierte Periskop 11 weist beiderseits eines Tubus 12 oder gläsernen Zylinders 13 je eine Umlenkfläche 14 auf, nämlich eine 14.1 im Außenbereich 1 und eine 14.2 im Innenbereich 2 gelegene. Das Periskop 11 ist austauschbar vom Innern her in eine Montage-Bohrung 15, etwa durch die Panzerung 16 eines Operationsraumes als dem Innenbereich 2, gesteckt. Mittels eines Gummiringes 17 auf einem in der Mittenregion des Tubus 12 bzw. des Zylinders 13 umlaufenden Anlage-Flansch 18 erfolgt eine Abdichtung und Halterung in der Bohrung 15, wie bei eingeführten Winkelspiegeln üblich. Die Periskop-Umlenkflächen 14 zum Reflektieren des Außenbild-Strahlenganges 19 um jeweils typisch 90° können die Oberflächen von Spiegeln oder Prismen sein. Der tritt vom Außenbereich 1 her in die Ausblick-Öffnung 20.1 in das Periskop 11 ein und verläßt es durch die betrachterseitige Einblick-Öffnung 20.2 in Richtung auf das Auge des Beobachters im Innenbereich 2.

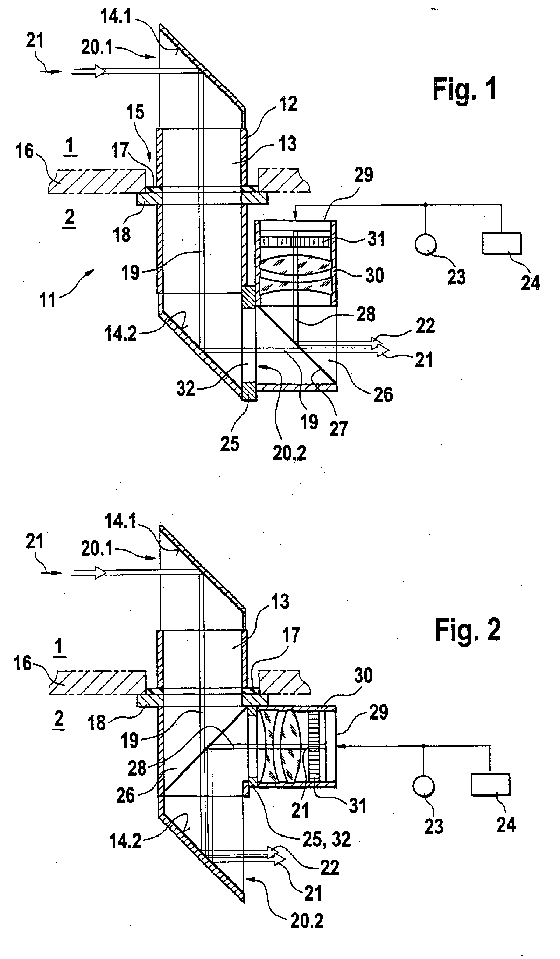

Um dieser Darstellung des Außenbildes 21 etwa von Sensoren 23 oder von einem Bildgenerator 24 stammende Zusatzinformationen 22 überlagern zu können, ist der Einblick-Öffnung 20.2 über eine Distanzelement 25 betrachtungsseitig ein zwei Strahlen 19+28 zusammenführender Strahlteiler 26 in Fig.1 vorgeschaltet, der beispielsweise einfach aus einer gegensinnigen Zusammenschaltung zweier Prismen mit Beschichtungen von spektral unterschiedlichen Reflexionseigenschaften ihrer schräg zu den Strahlrichtungen aufeinanderliegenden Koppelflächen 27 bestehen kann. Gegen diese dadurch als selektiv durchlässiger Umlenkspiegel wirkenden Koppelflächen 27 sind einerseits der durch die Öffnung 20.2 austretende Strahlengang 19 mit dem Außenbild 21 und andererseits, quer dazu, ein Strahlengang 28 mit den Zusatzinformationen 22 gerichtet. Diese werden von den Sensoren 23 und / oder vom Bildgenerator 24 auf einem elektrooptischen Display 29, z.B. auf Flüssigkristall-Basis, erzeugt und über ein Okular 30 für die Augenanpassung des Betrachters in den Strahlteiler 26 eingestrahlt. Dadurch überlagern sich betrachterseitig die Darstellungen des entfernten Außenbildes 21 und der an sich viel näher auf dem Display 29 gelegenen Zusatzinformationen 22 beide im Unendlichen, um Adaptionsprobleme des Auges des Betrachters zu vermeiden. Ein zusätzlich zwischen Display 29 und Okular 30 eingeschaltetes Blendensystem 31, vorzugsweise basierend auf einer optischen Kanalstruktur, ist nützlich zum Unterdrücken störender Reflexionen vor dem Display 29.

Um das Außenbild 21 ausblenden und dadurch ungestört nur die Darstellung vom Display 29 betrachten zu können, ist ein Verschluß 32 etwa nach Art einer Lamellen- oder einer Irisblende vorgesehen, der vorzugsweise in das Distanzelement 25 integriert ist.

Bei der abgewandelten Ausführungsform nach Fig.2 ist der Strahlteiler 26 im Strahlengang 19 des Außenbildes 21 im Gegensatz zu Fig.1 nicht mehr hinter sondern nun vor dem Prisma mit der Einblick-Öffnung 20.2 und somit bei dem Tubus bzw. Zylinder 13 gleich unterhalb des Montage-Flansches 18 angeordnet, was - ausweislich der aus Fig.1 übernommenen Bezugszeichen - bei gleichen optischen Gegebenheiten einen kompakteren Aufbau erbringt.

## Patentansprüche

1. Periskop (11) zum Übertragen eines Außenbildes (21) an eine Einblick-Öffnung (20.2), wobei dem Strahlengang (19) des Außenbildes (21) bei der Einblick-Öffnung (20.2) ein Strahlengang (28) mit visuellen Zusatzinformationen (22) überlagert ist,
**dadurch gekennzeichnet,**
**dass** die Zusatzinformationen (22) von einem Zeichen generierenden Bildrechner (24) auf einem elektrooptischen Display (29) generiert sind.

2. Periskop nach dem vorangehenden Anspruch,
**dadurch gekennzeichnet,**
**dass** dem Display (29) ein Okular (30) zum Betrachten der Zusatzinformationen (22) im Unendlichen nachgeschaltet ist.

3. Periskop nach einem der vorangehenden Ansprüche,
**dadurch gekennzeichnet,**
**dass** dem Display (29) ein Blendensystem (31) gegen störende Reflexionen nachgeschaltet ist.

4. Periskop nach einem der vorangehenden Ansprüche,
**dadurch gekennzeichnet,**
**dass** dem Display (29) ein Verschluss (32) nachgeschaltet ist.

5. Periskop nach einem der vorangehenden Ansprüche,
**dadurch gekennzeichnet,**
**dass** im Außenbild-Strahlengang (19) ein Verschluss (32) angeordnet ist.

6. Periskop nach einem der vorangehenden Ansprüche,
**dadurch gekennzeichnet,**
**dass** im Strahlengang (19; 28) sowohl des Außenbildes (21) wie auch der Zusatzinformationen (22) ein Strahlteiler (26) angeordnet ist, dessen Aufteilungsverhältnis einen Betrieb in verschiedenen Modi erlaubt, bei denen entweder nur das Außenbild (21), oder dieses mit überlagerten Zusatzinformationen (22), oder nur die Zusatzinformationen (22) von einem Display (29) an der Einblick-Öffnung (20.2) dargestellt werden.

7. Periskop nach einem der vorangehenden Ansprüche,
**dadurch gekennzeichnet,**
**dass** die Zusatzinformationen (22), gegebenenfalls mit unterlegtem Außenbild (21), über einen weiteren Strahlteiler zur Betrachtung mit zwei Augen aufgespalten sind.

8. Periskop nach einem der vorangehenden Ansprüche,
**dadurch gekennzeichnet,**
**dass** im Falle des Einblendens von Zusatzinformationen (22), die von zwei Kameras stammen, zwei Displays (29) zu zwei nebeneinander gelegenen Strahlengängen (28) führen, die zur Darstellung eines natürlichen Stereobildes den beiden Augen eines Betrachters zugeordnet sind.

9. Periskop nach dem vorangehenden Anspruch,
**dadurch gekennzeichnet,**
**dass** es bei Einsatz von Infrarot-Kameras als "Fahrer-Nachtsichtgerät" zum Fahren in der Dunkelheit dient.

10. Periskop nach einem der vorangehenden Ansprüche,
**dadurch gekennzeichnet,**
**dass** die Zusatzinformationen (22) in einem Simulationssystem erzeugte virtuelle Landschaftsbilder sind, mit denen das Periskop als Ausbildungs-Simulator dient.
